# FASCICULE DE BREVET EUROPEEN

(11) **EP 4 264 066 B1**
(45) Date de publication et mention de la délivrance du brevet: **09.10.2024**
(21) Numéro de dépôt: 21742448.0
(22) Date de dépôt: 20.07.2021
(51) Int. Cl.: F16B 39/32

(54) **ARTICLE DÉCORATIF AVEC SYSTÈME DE SOLIDARISATION**
DEKORATIVER ARTIKEL UND BEFESTIGUNGSSYSTEM
DECORATIVE ARTICLE AND SYSTEM FOR FASTENING

(30) Priorité: 18.12.2020 EP 20215801
(43) Date de publication de la demande: 25.10.2023
(73) Titulaire: Cartier International AG, 6312 Steinhausen (CH)
(72) Inventeur: BOLE-FEYSOT, Marc, 25500 MONTLEBON (FR); DUMONT, Franck, 25800 VALDAHON (FR); JEANNIER, Sébastien, 25530 VERCEL-VILLEDIEU-LE-CAMP (FR)
(74) Mandataire: LLR
(86) Numéro de dépôt international: PCT/EP2021/070280
(87) Numéro de publication internationale: WO 2022/128176

(56) Documents cités:
- EP-A1- 3 590 372
- EP-A2- 2 362 108
- EP-B1- 1 212 540
- CN-A- 108 953 354
- CN-A- 110 645 256
- DE-A1- 102010 024 870
- FR-A- 1 345 897
- GB-A- 190 922 485
- JP-A- 2018 513 319
- US-A- 2 553 889
- US-A- 4 119 131
- US-A- 5 700 122
- US-A- 6 102 639
- US-A1- 2016 131 175
- US-B1- 6 227 782

## Description

### DOMAINE TECHNIQUE DE L'INVENTION

La présente invention se rapporte à un système de solidarisation entre deux parties d'au moins une pièce formant tout ou partie d'un article décoratif tel qu'un article de bijouterie et notamment de telles parties ayant préférentiellement des formes correspondantes.

### ARRIÈRE-PLAN TECHNIQUE DE L'INVENTION

Dans le domaine de la bijouterie (voir par exemple EP 3 590 372 A1) notamment, des ensembles vis - écrou peuvent être utilisés pour, par exemple, fermer un collier ou un bracelet. Pour de telles applications, il faut pouvoir visser et dévisser les ensembles vis - écrou à de nombreuses reprises pour pouvoir libérer l'utilisateur du bijou pour nettoyer ce dernier ou en changer régulièrement.

Il a été constaté que cette fermeture réversible pouvait entraîner un dévissage intempestif et ainsi la perte accidentelle de tout ou partie du bijou. De plus, si les matériaux utilisés sont en métal précieux tel que l'or par exemple, les propriétés mécaniques de cette catégorie de matériaux sont plus favorables à un dévissage (limite élastique, module d'Young, fluage, dureté, etc.).

### RÉSUMÉ DE L'INVENTION

L'invention a pour but de proposer un article décoratif avec un système de solidarisation entre deux parties d'au moins une pièce formant par exemple un article décoratif tel qu'un article de bijouterie, dont chaque ensemble vis - écrou peut continuer à être vissé et dévissé régulièrement en évitant, ou au moins en limitant, toutefois le dévissage accidentel de l'ensemble vis - écrou pour empêcher que l'utilisateur perde tout ou partie de la pièce formant l'article décoratif sans s'en apercevoir.

À cet effet, l'invention se rapporte à un article décoratif comportant au moins deux parties d'au moins une pièce destinées à être couplées afin de s'attacher sur un utilisateur, **caractérisé en ce que** l'article décoratif comprend un système de solidarisation comportant un ensemble vis - écrou passant à travers chaque partie et destiné par vissage à plaquer les deux parties l'une contre l'autre, et **en ce que** le système de solidarisation comporte un dispositif de sécurité élastique afin que l'ensemble vis - écrou puisse continuer à être vissé et dévissé tout en empêchant élastiquement le déplacement relatif entre la vis et l'écrou en-dessous d'un couple prédéterminé.

Avantageusement selon l'invention, le dispositif de sécurité élastique évite que les mouvements de l'utilisateur entraînent un dévissage non désiré de l'ensemble vis - écrou. Le dispositif de sécurité élastique autorise toujours, de manière avantageuse, la fermeture réversible et, en plus, la vis peut donc être avantageusement dévissée uniquement quand l'utilisateur le souhaite vraiment à l'aide d'un outil comme, par exemple, un tournevis.

Il devient donc moins important de plaquer avec suffisamment de force les parties l'une contre l'autre, ce qui évite de détériorer le taraudage de l'écrou et/ou le filet de la vis en exerçant un couple trop grand de peur de perdre l'article décoratif. En outre, dans le cas d'un métal précieux tel que de l'or, un tel couple trop grand augmente également le risque de détériorer la tête de la vis, voire marquer les parties autour de la vis si le tournevis quitte la tête de la vis de manière incontrôlée.

L'invention peut également comporter l'une ou plusieurs des caractéristiques optionnelles suivantes, prises seules ou en combinaison.

Le dispositif de sécurité élastique comporte préférentiellement au moins un ensemble denture - doigt élastique monté entre la vis et l'écrou afin d'offrir une pluralité de positions relatives discrètes dans lesquelles le déplacement relatif est empêché entre la vis et l'écrou en-dessous d'un couple prédéterminé. On comprend également, au vissage et au dévissage, que l'utilisateur sentira des positions stables successives lui permettant de mieux réaliser l'amplitude de rotation qu'il aura induite à la vis.

Selon une alternative, la denture est formée sur l'écrou et le doigt élastique est solidaire de la vis, ou inversement, la denture est formée sur la vis et le doigt élastique est solidaire de l'écrou.

Selon la première partie de l'alternative, la denture s'étend, de manière préférée, circonférentiellement coaxialement au taraudage de l'écrou et le doigt élastique est monté sur l'extrémité libre de la vis en prolongement du filet. Plus précisément, le doigt élastique peut par exemple être rapporté sur la vis de manière à être solidaire en rotation avec la vis.

Selon la deuxième partie de l'alternative, la denture s'étend, de manière préférée, circonférentiellement coaxialement au filet de la vis et le doigt élastique est monté en prolongement du taraudage de l'écrou. Plus précisément, le doigt élastique peut être par exemple rapporté sur l'écrou de manière à être solidaire en rotation avec l'écrou.

Chaque ensemble denture - doigt élastique peut comporter une denture unique coopérant avec plusieurs doigts élastiques en même temps afin de bloquer élastiquement l'ensemble sur plusieurs dents de la denture. Suivant la géométrie de l'ensemble denture - doigt élastique, le couple prédéterminé dans le sens de vissage peut être inférieur, égal ou supérieur à celui dans le sens du dévissage. Préférentiellement, le couple prédéterminé dans le sens de vissage est inférieur à celui dans le sens du dévissage.

Le dispositif de sécurité élastique, en-dessous d'un couple prédéterminé, peut être configuré de manière à maintenir élastiquement la position de la vis par rapport à celle de l'écrou dans le sens du dévissage. Le couple prédéterminé dans le sens du dévissage peut être inférieur à 10 N mm, de manière préférée inférieur à 8 N mm et, de manière encore plus préférée, inférieur à 5 N mm, c'est-à-dire par exemple notamment égal à 9 N mm, 8 N mm, 7 N mm, 6 N mm, 5 N mm, 4 N mm, 3 N mm, 2 N mm ou 1 N mm.

Le dispositif de sécurité élastique, au-dessus d'un couple prédéterminé, peut être configuré de manière à permettre le déplacement de la vis par rapport à celle de l'écrou dans le sens du vissage. Le couple prédéterminé dans le sens du vissage peut être supérieur à 1 N mm, de manière préférée supérieur à 3 N mm et, de manière encore plus préférée, supérieur à 4 N mm, c'est-à-dire par exemple notamment égal à 1,5 N mm, 2 N mm, 2,5 N mm, 3 N mm, 3,5 N mm, 4 N mm, 4,5 N mm, 5 N mm, 5,5 N mm, 6 N mm, 6,5 N mm ou 7 N mm.

Le couple prédéterminé du dispositif de sécurité élastique dans le sens de vissage peut être égal à celui dans le sens du dévissage afin de fournir un effort identique ou similaire pour serrer ou desserrer les deux parties l'une par rapport à l'autre.

Le dispositif de sécurité élastique peut être actif à différentes pénétrations de vissage de l'ensemble vis - écrou dans le sens du vissage et/ou dans le sens du dévissage ce qui permet à l'utilisateur de choisir la force de placage des deux parties l'une par rapport à l'autre sans risque de perdre tout ou partie de la pièce formant l'article décoratif.

Le système de solidarisation et/ou l'article décoratif peut être tout ou partie formé à base d'au moins un métal précieux. Le métal précieux peut ainsi être de l'or ou du platine. À titre d'exemple nullement limitatif, la vis et/ou l'écrou et/ou la denture et/ou le doigt élastique pourrait être formé à base d'un métal précieux (ou un de ses alliages).

Enfin, l'article décoratif, tel qu'une pièce de bijouterie ou de joaillerie, peut être un bracelet.

### BRÈVE DESCRIPTION DES DESSINS

D'autres particularités et avantages de l'invention ressortiront clairement de la description qui en est faite ci-après, à titre indicatif et nullement limitatif, en référence aux dessins annexés, dans lesquels :
- La figure 1 est une vue schématique d'un article décoratif pouvant comporter un système de solidarisation selon l'invention ;
- La figure 2 est une vue en perspective de deux parties d'une pièce avant blocage par un système de solidarisation selon l'invention ;
- La figure 3 est une vue éclatée du système de solidarisation et de deux parties à plaquer l'une sur l'autre (la position des différents composants n'étant pas nécessairement conforme à leur position respective quand le système est assemblé) ;
- La figure 4 est une vue en coupe selon le plan IV-IV de la figure 1 ;
- La figure 5 est une vue en perspective d'un ensemble denture - doigt élastique d'un dispositif de sécurité élastique selon l'invention ;
- La figure 6 est une vue partielle en perspective d'un article décoratif dont un système de solidarisation selon l'invention plaque deux parties.

### DESCRIPTION DÉTAILLÉE D'AU MOINS UN MODE DE RÉALISATION DE L'INVENTION

Sur les différentes figures, les éléments identiques ou similaires portent les mêmes références, éventuellement additionnés d'un indice. La description de leur structure et de leur fonction n'est donc pas systématiquement reprise.

Dans tout ce qui suit, les orientations sont les orientations des figures. En particulier, les termes « supérieur », « inférieur », « gauche », « droit », « au-dessus », « en-dessous », « vers l'avant » et « vers l'arrière » s'entendent généralement par rapport au sens de représentation des figures.

Par « article de maroquinerie », on entend tous les types d'articles à base de cuir comme un bracelet, un sac, une ceinture, une selle par exemple équestre, un harnachement par exemple équestre, etc...

Par « article de tissage », on entend tous les types d'articles à base de matière textile comme une étoffe, un sac, un vêtement, un bracelet, une ceinture, un parachute, etc...

Par « article de bijouterie », on entend tous les types d'articles de décoration ou d'ornement pouvant comporter une pierre d'apparat non précieuse comme un bracelet, un collier, une ceinture, etc...

Par « article de joaillerie », on entend tous les types d'articles de décoration ou d'ornement pouvant comporter une pierre précieuse ou semi-précieuse comme un bracelet, un collier, une ceinture, etc...

Par « article d'horlogerie », on entend tous les types d'instruments de mesure ou de comptage du temps tels que les pendules, les pendulettes, les montres, etc...

Par « à base de », on entend un matériau ou alliage constituant au moins 50 % en masse totale ou poids d'un élément donné.

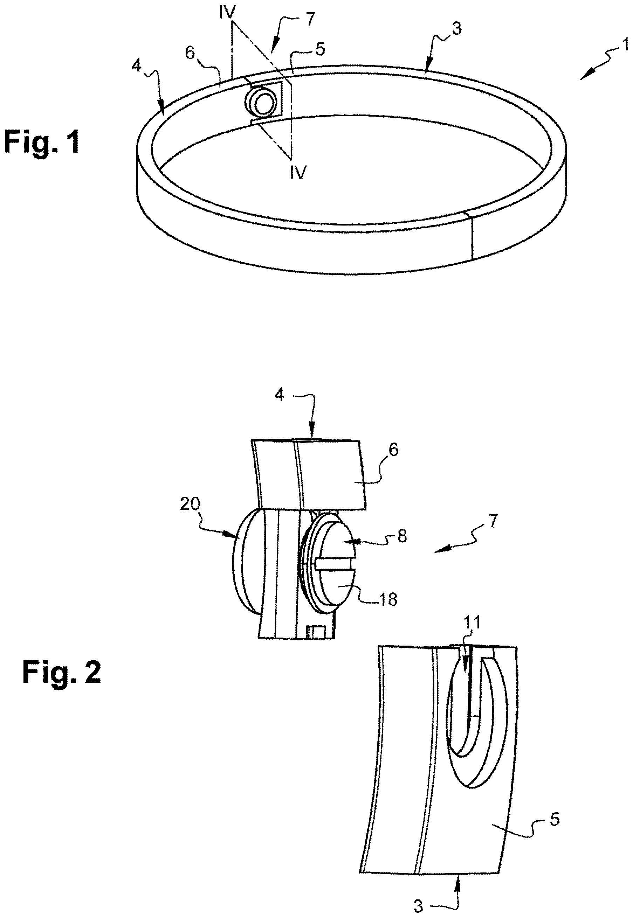

L'invention a pour but de proposer un système 7 de solidarisation entre deux parties 5, 6 d'au moins une pièce 3, 4 formant un article 1 du type décoratif, tel qu'un article de bijouterie ou de joaillerie. On comprend donc que l'article 1 comporte une pièce ou plusieurs pièces. Dans l'exemple illustré à la figure 1, l'article 1 décoratif forme le bracelet d'un article de bijouterie formée à base de deux pièces 3, 4, chacune en forme de demi-anneaux préférentiellement en métal précieux. Selon l'invention, chaque couple de parties 5, 6 des pièces 3, 4 peut comporter un système 7 de solidarisation. Dans l'exemple illustré à la figure 1, un seul couple comporte le système 7 de solidarisation, le deuxième couple comportant une articulation avec préférentiellement une liaison du type à pivot.

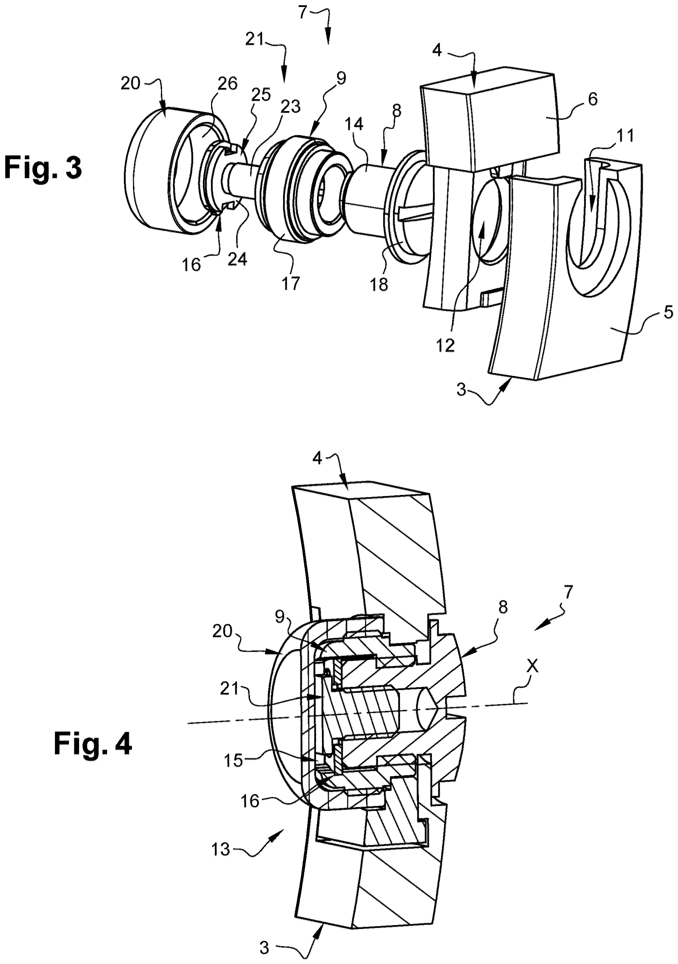

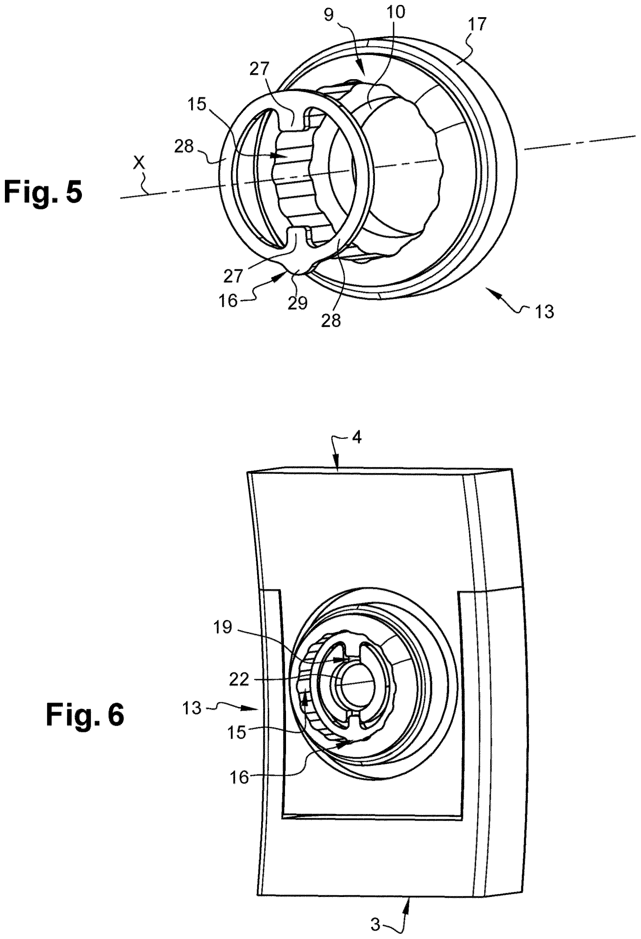

De fait, au moins les deux parties 5, 6 sont destinées à être couplées par le système 7 de solidarisation afin d'attacher l'article 1 décoratif sur un utilisateur. Plus précisément, le système 7 de solidarisation comporte au moins un ensemble vis 8 - écrou 9 destiné, par vissage, à plaquer les deux parties 5, 6 l'une contre l'autre comme visible aux figures 4 et 6. Dans l'exemple illustré aux figures 2 à 6, on peut voir que les parties 5, 6 ont des formes complémentaires destinées à former un anneau de section constante avec les deux pièces 3, 4 emboîtées y compris au voisinage du contact entre les parties 5, 6.

Chaque ensemble vis 8 - écrou 9 passe à travers chaque partie 5, 6, c'est-à-dire notamment que la vis 8 traverse les trous 11, 12 des parties 5, 6 et que l'écrou 9 ne puisse pas traverser le trou 11 de la partie 5, afin de pouvoir plaquer les parties 5, 6 l'une sur l'autre. Dans l'exemple illustré à la figure 4, on s'aperçoit que l'écrou 9 traverse le trou 12 de la partie 6 afin de visser la vis 8 et l'écrou 9 dans l'épaisseur de la pièce 4, c'est-à-dire rendre plus compacte l'épaisseur du système 7 de solidarisation selon l'axe de rotation X de la vis 8.

Avantageusement selon l'invention, le système 7 de solidarisation comporte un dispositif 13 de sécurité élastique afin d'empêcher élastiquement le déplacement relatif entre la vis 8 et l'écrou 9 en-dessous d'un couple prédéterminé.

Le dispositif 13 de sécurité élastique évite notamment que les mouvements de l'utilisateur entraînent un dévissage non désiré de l'ensemble vis 8 - écrou 9. Plus précisément, le dispositif 13 de sécurité élastique, en-dessous d'un couple prédéterminé inférieur à 10 N mm, de manière préférée inférieur à 8 N mm et, de manière encore plus préférée, inférieur à 5 N mm, c'est-à-dire par exemple notamment égal à 9 N mm, 8 N mm, 7 N mm, 6 N mm, 5 N mm, 4 N mm, 3 N mm, 2 N mm ou 1 N mm, permet de maintenir élastiquement la position de la vis 8 par rapport à celle de l'écrou 9 dans le sens du dévissage. En outre, au-dessus d'un couple prédéterminé supérieur à 1 N mm, de manière préférée supérieur à 3 N mm et, de manière encore plus préférée, supérieur à 4 N mm, c'est-à-dire par exemple notamment égal à 1,5 N mm, 2 N mm, 2,5 N mm, 3 N mm, 3,5 N mm, 4 N mm, 4,5 N mm, 5 N mm, 5,5 N mm, 6 N mm, 6,5 N mm ou 7 N mm, le dispositif de sécurité élastique permet le déplacement de la vis 8 par rapport à celle de l'écrou 9 dans le sens du vissage.

On comprend donc que le couple prédéterminé dans le sens du vissage est préférentiellement inférieur à celui dans le sens du dévissage. Toutefois, le couple prédéterminé pourrait être identique pour le vissage et le dévissage ou le couple prédéterminé dans le sens du vissage pourrait être supérieur à celui dans le sens du dévissage. La vis 8 peut donc être avantageusement dévissée uniquement quand l'utilisateur le souhaite vraiment à l'aide d'un outil approprié comme, par exemple un tournevis (non représenté). Selon l'invention, le dispositif 13 de sécurité élastique est actif à différentes pénétrations de vissage de l'ensemble vis 8 - écrou 9 dans le sens du vissage et/ou dans le sens du dévissage ce qui permet à l'utilisateur de choisir la force de placage des deux parties 5, 6 l'une par rapport à l'autre sans risque de perdre tout ou partie de la pièce formant l'article décoratif.

La vis 8 et/ou l'écrou 9, comme les pièces 3, 4, peut être en matériau précieux tel qu'à base d'or (ou un de ses alliages) et/ou de platine (ou un de ses alliages). Préférentiellement, la vis 8 et l'écrou 9 sont formés à base d'au moins un métal précieux et, de manière encore plus préférée, de la même composition que les pièces 3, 4.

On comprend donc qu'il devient donc moins important de plaquer avec suffisamment de force les parties 5, 6 l'une contre l'autre car la position de la vis 8 par rapport à celle de l'écrou 9 sera avantageusement maintenue grâce au dispositif 13 de sécurité élastique. Il est immédiat qu'il peut ainsi être évité de détériorer le taraudage de l'écrou 9 et/ou le filet de la vis 8 en n'ayant pas à exercer un couple particulier comme, par exemple, trop excessif de peur de perdre l'article 1 décoratif. En outre, dans le cas d'un métal précieux tel que de l'or, un tel couple trop excessif étant évité, le risque de détériorer la tête 18 de la vis 8 ou de marquer les parties 5, 6 autour de la vis 8 si le tournevis quitte la tête 18 de la vis 8 de manière incontrôlée, est diminué.

Le dispositif 13 de sécurité élastique comporte préférentiellement au moins un ensemble denture 15 - doigt élastique 16 monté entre la vis 8 et l'écrou 9 afin d'offrir une pluralité de positions relatives discrètes pour chacune desquelles le déplacement relatif est empêché entre la vis 8 et l'écrou 9 en-dessous d'un couple prédéterminé. On comprend également, au vissage et au dévissage, que l'utilisateur sentira des positions stables successives lui permettant de mieux réaliser l'amplitude de rotation selon l'axe X qu'il aura induite à la vis 8. Suivant la géométrie de l'ensemble denture 15 - doigt élastique 16, le couple prédéterminé dans le sens de vissage peut être inférieur, égal ou supérieur à celui dans le sens du dévissage. Préférentiellement, le couple prédéterminé dans le sens de vissage est égal à celui dans le sens du dévissage afin de fournir un effort identique ou similaire pour serrer ou desserrer les deux parties 5, 6 l'une par rapport à l'autre.

En outre, la denture 15 et/ou le doigt élastique 16 est, de manière préférée, en matériaux précieux tel qu'à base d'or (ou un de ses alliages) et/ou de platine (ou un de ses alliages). Toutes combinaisons de matériaux précieux et non précieux sont également possibles entre la vis 8, l'écrou 9, la denture 15 et le doigt élastique 16. Par exemple, de manière non limitative, seule la vis 8 pourrait être en métal précieux ou tous les composants précités pourraient être en métal précieux.

Selon une alternative, la denture 15 est formée sur l'écrou 9 et le doigt élastique 16 est solidaire de la vis 8, ou inversement, la denture 15 est formée sur la vis 8 et le doigt élastique 16 est solidaire de l'écrou 9.

Selon la première partie de l'alternative, la denture 15 est préférentiellement formée coaxialement au taraudage de l'écrou 9 et le doigt élastique 16 est monté sur l'extrémité libre de la vis 8 en prolongement du filet. Plus précisément, le doigt élastique 16 peut par exemple être rapporté sur la vis 8 de manière à être solidaire en rotation avec la vis 8.

Selon la deuxième partie de l'alternative, la denture 15 est préférentiellement formée coaxialement au filet de la vis 8 et le doigt élastique 16 est monté en prolongement du taraudage de l'écrou 9. Plus précisément, le doigt élastique 16 peut être par exemple rapporté sur l'écrou 9 de manière à être solidaire en rotation avec l'écrou 9.

Pour mieux illustrer l'invention, la première partie de l'alternative est représentée aux figures 2 à 6. Ainsi, dans l'exemple de la figure 5, l'écrou 9 est de forme généralement annulaire dont le diamètre externe comporte un filet 17. L'écrou 9 comporte en outre sur un premier diamètre interne un taraudage 10 destiné à se coupler avec le filet 14 de la vis 8 et en prolongement selon l'axe de rotation X, un deuxième diamètre interne, plus grand que le premier diamètre interne, la denture 15 destinée à se coupler avec le doigt élastique 16.

La largeur axiale (selon l'axe X) de la denture 15 permet au dispositif 13 de sécurité élastique de pouvoir être actif à différentes pénétrations de vissage de l'ensemble vis 8 - écrou 9 dans le sens du vissage et/ou dans le sens du dévissage. En effet, le doigt élastique 16 étant solidaire de l'extrémité de la vis 8, ce premier va « avancer » ou « reculer » axialement par rapport à la denture 15. Préférentiellement, largeur axiale (selon l'axe X) de la denture 15 est suffisamment grande pour permettre au dispositif 13 de sécurité élastique d'être actif à toutes les pénétrations de vissage de l'ensemble vis 8 - écrou 9 dans le sens du vissage et/ou dans le sens du dévissage entre la position de placage des deux parties 5, 6 illustrée aux figures 4 et 6 et la position au-delà de laquelle la vis 8 ne peut plus être d'avantage dévissée de l'écrou 9 comme expliqué ci-dessous.

La vis 8 comporte une tête 18 destinée à servir de butée à la partie 5 pour la rapprocher de la partie 6. La vis 8 comporte, en prolongement selon l'axe de rotation X, le filet 14 puis préférentiellement à son extrémité opposée à la tête 18 des moyens 19 de réception du doigt élastique 16 de manière à être rendre solidaire en rotation la vis 8 avec le doigt élastique 16. Dans l'exemple illustré aux figures 2 à 6, les moyens 19 de réception comportent deux gorges sensiblement verticales. Bien entendu, les moyens 19 de réception pourraient différer notamment en fonction de la forme de la pièce recevant le doigt élastique 16.

Comme visible aux figures 3 et 4, il est également prévu des moyens 21 de retenue du doigt élastique 16 contre la vis 8 afin de garantir le maintien du doigt élastique 16 dans le volume sensiblement cylindrique de la denture 15. Les moyens 21 de retenue dans l'exemple illustré à la figure 6 comporte un taraudage 22 dans la vis 8 coaxialement au filet 14 dans lequel est couplé un pion 25. Ce dernier comprend un filet 23 destiné à s'engrener avec le taraudage 22 pour maintenir la platine 24 du pion 25 dans le volume sensiblement cylindrique de la denture 15 en limitant le débattement du doigt élastique 16 le long de l'axe de rotation X. Pour faciliter le vissage du pion 25 dans la vis 8, on peut voir que deux encoches ont été ménagées périphériquement dans la platine 24. Bien entendu, les moyens 21 de réception pourraient différer notamment en fonction de la forme de la pièce recevant le doigt élastique 16.

Dans l'exemple illustré aux figures 2 à 6, le doigt élastique 16 est formé par une pièce sensiblement annulaire comprenant deux tenons 27 destinés à être montés dans les moyens 19 de réception, typiquement par les gorges sensiblement verticales à l'extrémité de la vis 8. Les deux tenons 27 sont raccordés entre eux par deux bras 28 élastiques semi-annulaires destinés à autoriser un rapprochement entre les tenons 27 sous contrainte, par, notamment, un déplacement vers l'axe de rotation X apte à écarter la butée 29 du doigt élastique 16 de la denture 15. Comme visible aux figures 5 et 6, les tenons 27 et, incidemment des moyens 19 de réception associés, utilisés peuvent être de formes différentes (géométrie, dimensions, etc.) afin de ne rendre possible qu'une seule configuration de montage. De fait, les tenons 27 peuvent servir de détrompeurs (parfois connus des termes japonais « poka-yoké ») lors de l'assemblage.

Bien entendu, le doigt élastique 16 pourraient différer notamment en fonction de la forme de la denture 15. Le doigt élastique 16 peut ainsi être plus simple que la pièce sensiblement annulaire de la figure 5. Il pourrait ainsi être monobloc avec l'extrémité de la vis 8 (ne nécessitant plus de tenons 27 ni de moyens 19 de réception) et comporter essentiellement qu'un bras élastique 28 et la butée 29 à la manière d'un sautoir horloger. Sans être monobloc, le doigt élastique 16 pourrait être sensiblement en forme de C (en nécessitant les tenons 27 et les moyens 19 de réception) avec un bras 28 élastique unique muni à une extrémité d'une butée 29. Inversement, le doigt élastique 16 pourrait également être plus compliqué que la pièce sensiblement annulaire de la figure 5.

Dans l'exemple illustré aux figures 2 à 6, on peut également voir qu'il est prévu un couvercle 20 pour protéger l'utilisateur lors du contact avec le système 7 de solidarisation. Comme visibles aux figures 3 et 4, le couvercle 20 peut ainsi comprendre un taraudage 26 destiné à se coupler avec le filet 17 de l'écrou 9. Le couvercle 20 peut être une pièce pleine en forme de bol comme dans les figures 1 à 4. Bien entendu, le couvercle 20 pourrait toutefois, sans sortir du cadre de l'invention, comporter une ouverture afin de laisser entrevoir au moins une partie du système 7 de solidarisation comme l'ensemble denture 15 - doigt élastique 16, tout en continuant à protéger l'utilisateur. Enfin, le système 7 de solidarisation pourrait également ne comporter aucun couvercle 20 ni aucun filet 17 sur l'écrou 9 sans sortir du cadre de l'invention.

De fait, dans la position de la figure 2, de manière préférée, la vis 8 ne peut pas être retirée de l'écrou 9, c'est-à-dire coopérer avec une butée (non représentée) au-delà de laquelle elle ne peut pas d'avantage s'écarter de l'écrou 9. Dans cette position, l'utilisateur après avoir entouré l'article 1 décoratif autour de son poignet par exemple, rapproche les deux parties 5, 6 de manière à joindre, préférentiellement par coulissement, la partie 5 entre la partie 6 et la tête 18 de la vis 8 guidée par le trou 11. L'utilisateur peut ensuite, avantageusement selon l'invention, visser la vis 8 à l'aide par exemple d'un tournevis grâce à une forme, telle qu'une encoche, ménagée sur la tête 18. Dès que l'utilisateur applique une force supérieure au couple prédéterminé du dispositif 13 de sécurité élastique, la vis 8 peut être déplacée par rapport à l'écrou 9 de manière à visser ou dévisser le système 7 de solidarisation pour, respectivement plaquer les parties 5, 6 ou au contraire les libérer.

Dès le premier pas de la denture 15 passé par le doigt élastique 16, au vissage et au dévissage, l'utilisateur sent des positions stables successives lui permettant de mieux réaliser l'amplitude de rotation qu'il induit à la vis 8. Il ressent moins le besoin de plaquer avec une grande force les parties 5, 6, ce qui évite de détériorer le taraudage 10 de l'écrou 9 et/ou le filet 14 de la vis 8 mais également la tête 18 et les parties 5, 6.

Enfin, avantageusement selon l'invention, le dispositif 13 de sécurité élastique permet à chaque ensemble vis 8 - écrou 9 de continuer à pouvoir être vissé et dévissé régulièrement en évitant toutefois tout dévissage accidentel de l'ensemble vis 8 - écrou 9 pour empêcher que l'utilisateur perde tout ou partie de l'article 1 décoratif sans s'en apercevoir.

L'invention n'est pas limitée aux modes de réalisation et variantes présentés et d'autres modes de réalisation et variantes apparaîtront clairement à l'homme du métier. Ainsi, les modes de réalisation et variantes sont combinables entre eux sans sortir du cadre de l'invention. À titre nullement limitatif, il peut être envisagé que le dispositif 13 de sécurité élastique comporte plusieurs ensembles denture 15 - doigt élastique 16.

De plus, il est notamment possible que chaque ensemble denture 15 - doigt élastique 16 puisse comporter une denture 15 unique coopérant avec plusieurs doigts élastiques 16 ou plusieurs butées 29 en même temps afin de bloquer élastiquement l'ensemble sur plusieurs dents de la denture 15.

En outre, l'invention ne saurait se limiter à un article 1 décoratif de bijouterie ou de joaillerie. Ainsi, l'invention pourrait également être appliquée dans d'autres domaines tels que, par exemple, l'horlogerie, la maroquinerie, les arts de la table, les armes à feu ou les instruments d'écriture. Par conséquent, à la place d'un article 1 décoratif formant un article de bijouterie ou une article de joaillerie, selon l'invention, l'article 1 décoratif pourrait former, par exemple, un article d'horlogerie, un article de tissage ou un article de maroquinerie.

## Revendications

1. Article (1) décoratif comportant au moins deux parties (5, 6) d'au moins une pièce (3, 4) destinées à être couplées afin de s'attacher sur un utilisateur, **caractérisé en ce que** l'article (1) décoratif comprend un système (7) de solidarisation comportant un ensemble vis (8) - écrou (9) passant à travers chaque partie (5, 6) et destiné par vissage à plaquer les deux parties (5, 6) l'une contre l'autre, et **en ce que** le système (7) de solidarisation comporte un dispositif (13) de sécurité élastique afin que l'ensemble vis (8) - écrou (9) puisse continuer à être vissé et dévissé tout en empêchant élastiquement le déplacement relatif entre la vis (8) et l'écrou (9) en-dessous d'un couple prédéterminé.

2. Article (1) décoratif selon la revendication précédente, dans lequel le dispositif (13) de sécurité élastique comporte au moins un ensemble denture (15) - doigt élastique (16) monté entre la vis (8) et l'écrou (9) afin d'offrir une pluralité de positions relatives discrètes dans lesquelles le déplacement relatif est empêchée entre la vis (8) et l'écrou (9) en-dessous d'un couple prédéterminé.

3. Article (1) décoratif selon la revendication précédente, dans lequel la denture (15) est formée sur l'écrou (9) et le doigt élastique (16) est solidaire de la vis (8).

4. Article (1) décoratif selon la revendication précédente, dans lequel la denture (15) s'étend circonférentiellement coaxialement au taraudage (10) de l'écrou (9).

5. Article (1) décoratif selon la revendication 3 ou 4, dans lequel le doigt élastique (16) est monté sur l'extrémité libre de la vis (8) en prolongement du filet (14).

6. Article (1) décoratif selon la revendication précédente, dans lequel le doigt élastique (16) est rapporté sur la vis (8) de manière à être solidaire en rotation avec la vis (8).

7. Article (1) décoratif selon la revendication 2, dans lequel la denture (15) est formée sur la vis (8) et le doigt élastique (16) est solidaire de l'écrou (9).

8. Article (1) décoratif selon la revendication précédente, dans lequel la denture (15) s'étend circonférentiellement coaxialement au filet (14) de la vis (8).

9. Article (1) décoratif selon la revendication 7 ou 8, dans lequel le doigt élastique (16) est monté en prolongement du taraudage (10) de l'écrou (9).

10. Article (1) décoratif selon la revendication précédente, dans lequel le doigt élastique (16) est rapporté sur l'écrou (9) de manière à être solidaire en rotation avec l'écrou (9).

11. Article (1) décoratif selon l'une des revendications 2 à 10, dans lequel chaque ensemble denture (15) - doigt élastique (16) comporte une denture (15) coopérant avec plusieurs doigts élastiques (16).

12. Article (1) décoratif selon l'une des revendications précédentes, dans lequel le dispositif (13) de sécurité élastique, en-dessous d'un couple prédéterminé inférieur à 10 N mm, de manière préférée inférieur à 8 N mm et, de manière encore plus préférée, inférieur à 5 N mm, est configuré de manière à maintenir élastiquement la position de la vis (8) par rapport à celle de l'écrou (9) dans le sens du dévissage.

13. Article (1) décoratif selon l'une des revendications précédentes, dans lequel le dispositif (13) de sécurité élastique, au-dessus d'un couple prédéterminé supérieur à 1 N mm, de manière préférée supérieur à 3 N mm et, de manière encore plus préférée, supérieur à 4 N mm, est configuré de manière à permettre le déplacement de la vis (8) par rapport à celle de l'écrou (9) dans le sens du vissage.

14. Article (1) décoratif selon l'une des revendications précédentes, dans lequel le couple prédéterminé du dispositif (13) de sécurité élastique dans le sens de vissage est égal à celui dans le sens du dévissage.

15. Article (1) décoratif selon l'une des revendications précédentes, dans lequel le dispositif (13) de sécurité élastique est actif à différentes pénétrations de vissage de l'ensemble vis (8) - écrou (9) dans le sens du vissage et/ou dans le sens du dévissage.

16. Article (1) décoratif selon l'une des revendications précédentes, étant tout ou partie formé à base d'au moins un métal précieux tel que de l'or ou du platine.

17. Article (1) décoratif selon l'une des revendications précédentes, étant un bracelet.

## Patentansprüche

1. Dekorativer Artikel (1) mit mindestens zwei Teilen (5, 6) aus mindestens einem Stück (3, 4), die dazu bestimmt sind, gekoppelt zu werden, um an einem Benutzer befestigt zu werden, **dadurch gekennzeichnet, dass** der dekorative Artikel (1) ein Befestigungssystem (7) mit einer Einheit aus Schraube (8) und Mutter (9) aufweist, die durch jedes Teil (5, 6) verläuft und dazu bestimmt ist, die beiden Teile (5, 6) durch Verschraubung aneinander zu befestigen, und dass das Befestigungssystem (7) eine elastische Sicherheitsvorrichtung (13) aufweist, damit die Einheit Schraube (8) - Mutter (9) weiterhin geschraubt und gelöst werden kann, während sie elastisch die relative Verschiebung zwischen der Schraube (8) und der Mutter (9) unterhalb eines vorbestimmten Drehmoments verhindert.

2. Dekorativer Artikel (1) nach dem vorhergehenden Anspruch, wobei die elastische Sicherheitsvorrichtung (13) mindestens eine Anordnung aus Zähnen (15) und elastischem Stift (16) aufweist, die zwischen der Schraube (8) und der Mutter (9) angebracht ist, um eine Vielzahl von diskreten Relativpositionen bereitzustellen, in denen eine relative Bewegung zwischen der Schraube (8) und der Mutter (9) unterhalb eines vorbestimmten Drehmoments verhindert wird.

3. Dekorativer Artikel (1) nach dem vorhergehenden Anspruch, bei dem die Zähne (15) an der Mutter (9) ausgebildet ist und der elastische Stift (16) fest mit der Schraube (8) verbunden ist.

4. Dekorativer Artikel (1) nach dem vorhergehenden Anspruch, bei dem sich die Zähne (15) in Umfangsrichtung koaxial zum Innengewinde (10) der Mutter (9) erstrecken.

5. Dekorativer Artikel (1) nach Anspruch 3 oder 4, bei dem der elastische Stift (16) am freien Ende der Schraube (8) in Verlängerung des Gewindes (14) angebracht ist.

6. Dekorativer Artikel (1) nach dem vorhergehenden Anspruch, bei dem der elastische Stift (16) so an der Schraube (8) angebracht ist, dass er drehfest mit der Schraube (8) verbunden ist.

7. Dekorativer Artikel (1) nach Anspruch 2, bei dem die Zähne (15) an der Schraube (8) ausgebildet sind und der elastische Stift (16) fest mit der Mutter (9) verbunden ist.

8. Dekorativer Artikel (1) nach dem vorhergehenden Anspruch, bei dem sich die Zähne (15) in Umfangsrichtung koaxial zum Gewinde (14) der Schraube (8) erstrecken.

9. Dekorativer Artikel (1) nach Anspruch 7 oder 8, bei dem der elastische Stift (16) in Verlängerung des Innengewindes (10) der Mutter (9) montiert ist.

10. Dekorativer Artikel (1) nach dem vorhergehenden Anspruch, wobei der elastische Stift (16) an der Mutter (9) angebracht ist, so dass er drehfest mit der Mutter verbunden ist.

11. Dekorativer Artikel (1) nach einem der Ansprüche 2 bis 10, wobei jede Anordnung aus Zähnen (15) und elastischen Stiften (16) eine Zahnung (15) aufweist, die mit mehreren elastischen Stiften (16) zusammenarbeitet.

12. Dekorativer Artikel (1) nach einem der vorhergehenden Ansprüche, wobei die elastische Sicherungsvorrichtung (13) unterhalb eines vorbestimmten Drehmoments von weniger als 10 N mm, bevorzugt weniger als 8 N mm und noch mehr bevorzugt weniger als 5 N mm, so konfiguriert ist, dass sie die Position der Schraube (8) relativ zu derjenigen der Mutter (9) in der Einschraubrichtung elastisch hält.

13. Dekorativer Artikel (1) nach einem der vorhergehenden Ansprüche, wobei die elastische Sicherheitsvorrichtung (13) oberhalb eines vorbestimmten Drehmoments von mehr als 1 N mm, bevorzugt mehr als 3 N mm und noch bevorzugter mehr als 4 N mm, so konfiguriert ist, dass sie die Verschiebung der Schraube (8) relativ zu der der Mutter (9) in der Einschraubrichtung zulässt.

14. Dekorativer Artikel (1) nach einem der vorhergehenden Ansprüche, wobei das vorbestimmte Drehmoment der elastischen Sicherungsvorrichtung (13) in Einschraubrichtung gleich dem in Ausschraubrichtung ist.

15. Dekorativer Artikel (1) nach einem der vorhergehenden Ansprüche, wobei die elastische Sicherheitsvorrichtung (13) bei verschiedenen Einschraubdurchdringungen der Anordnung Schraube (8) - Mutter (9) in Einschraubrichtung und/oder in Ausschraubrichtung aktiv ist.

16. Dekorativer Artikel (1) nach einem der vorhergehenden Ansprüche, der ganz oder teilweise aus mindestens einem Edelmetall wie Gold oder Platin geformt ist.

17. Dekorativer Artikel (1) nach einem der vorhergehenden Ansprüche, wobei es sich um ein Armband handelt.

## Claims

1. Decorative article (1) comprising at least two portions (5, 6) of at least one part (3, 4) intended to be coupled together in order to be attached to a user, **characterised in that** the decorative article (1) comprises an interlocking system (7) comprising a screw (8) and nut (9) assembly which passes through each portion (5, 6) and is intended to press the two portions (5, 6) against each other by screwing, and **in that** the interlocking system (7) comprises a flexible safety device (13) so that the screw (8) and nut (9) assembly can continue to be screwed and unscrewed whilst elastically preventing relative displacement between the screw (8) and the nut (9) below a predetermined torque.

2. Decorative article (1) according to the preceding claim, wherein the flexible safety device (13) comprises at least one toothing (15) and flexible catch (16) assembly mounted between the screw (8) and the nut (9) in order to provide a plurality of discrete relative positions in which relative displacement is prevented between the screw (8) and the nut (9) below a predetermined torque.

3. Decorative article (1) according to the preceding claim, wherein the toothing (15) is formed on the nut (9) and the flexible catch (16) is secured to the screw (8).

4. Decorative article (1) according to the preceding claim, wherein the toothing (15) extends circumferentially coaxially with the tapping (10) of the nut (9).

5. Decorative article (1) according to claim 3 or 4, wherein the flexible catch (16) is mounted on the free end of the screw (8) in the extension of the thread (14).

6. Decorative article (1) according to the preceding claim, wherein the flexible catch (16) is attached to the screw (8) so as to rotate with the screw (8).

7. Decorative article (1) according to claim 2, wherein the toothing (15) is formed on the screw (8) and the flexible catch (16) is secured to the nut (9).

8. Decorative article (1) according to the preceding claim, wherein the toothing (15) extends circumferentially coaxially with the thread (14) of the screw (8).

9. Decorative article (1) according to claim 7 or 8, wherein the flexible catch (16) is mounted protruding from the tapping (10) of the nut (9).

10. Decorative article (1) according to the preceding claim, wherein the flexible catch (16) is attached to the nut (9) so as to rotate with the nut (9).

11. Decorative article (1) according to one of claims 2 to 10, wherein each toothing (15) and flexible catch (16) assembly comprises a toothing (15) cooperating with several flexible catches (16).

12. Decorative article (1) according to any one of the preceding claims, wherein the flexible safety device (13), below a predetermined torque less than 10 N·mm, preferably less than 8 N·mm and, even more preferably, less than 5 N·mm, is configured so as to elastically maintain the position of the screw (8) with respect to that of the nut (9) in the unscrewing direction.

13. Decorative article (1) according to any one of the preceding claims, wherein the flexible safety device (13), above a predetermined torque greater than 1 N·mm, preferably greater than 3 N·mm and, even more preferably, greater than 4 N·mm, is configured so as to allow the displacement of the screw (8) with respect to that of the nut (9) in the screwing direction.

14. Decorative article (1) according to any one of the preceding claims, wherein the predetermined torque of the flexible safety device (13) in the screwing direction is equal to that in the unscrewing direction.

15. Decorative article (1) according to any one of the preceding claims, wherein the flexible safety device (13) is active at different screwing penetrations of the screw (8) and nut (9) assembly in the screwing direction and/or in the unscrewing direction.

16. Decorative article (1) according to any one of the preceding claims, being made entirely or partially of a material based on at least one precious metal such as gold or platinum.

17. Decorative article (1) according to any one of the preceding claims, being a bracelet.
